# EUROPEAN PATENT SPECIFICATION

(11) **EP 2 397 401 B1**
(45) Date of publication and mention of the grant of the patent: **30.09.2015**
(21) Application number: 10740939.3
(22) Date of filing: 04.02.2010
(51) Int. Cl.: B63B 45/00, B63C 9/00, B63C 11/48, G09B 19/00, G09B 23/30

(54) **DUMMY COMPRISING A POSITIONING SYSTEM FOR ASSISTANCE IN RESCUE OPERATIONS FOR PEOPLE AND SHIPS IN THE SEA**
DUMMY MIT EINEM POSITIONIERUNGSSYSTEM ZUR HILFE BEI RETTUNGSOPERATIONEN VON MENSCHEN UND SCHIFFEN AUF SEE
MANNEQUIN À SYSTÈME DE LOCALISATION POUR AIDER DANS DES OPÉRATIONS DE SAUVETAGE DE PERSONNES ET DE NAVIRES EN MER

(30) Priority: 16.02.2009 ES 200900423
(43) Date of publication of application: 21.12.2011
(73) Proprietor: Save-Dummy, S.L., 15960 Riveira (A Coruña) (ES)
(72) Inventor: SANTIAGO FONTAIÑA, José María, 15960 Riveira (A Coruña) (ES)
(74) Representative: Dennemeyer & Associates S.A.
(86) International application number: PCT/ES2010/000045
(87) International publication number: WO 2010/092199

(56) References cited:
- EP-A1- 1 961 654
- EP-A2- 0 723 790
- WO-A2-2005/002674
- WO-A2-2006/085030
- WO-A2-2006/099320
- CA-A1- 2 234 285
- GB-A- 2 228 234
- JP-A- 2003 280 704
- US-A- 5 221 161
- US-A- 6 162 106
- US-A1- 2007 151 498
- US-A1- 2007 205 905
- US-B2- 7 328 669

## Description

### Object of the Invention

The present disclosure relates to a dummy configured to search for shipwreck victims and ships during rescue operations, representing the main physical characteristics of a person such as weight, size, shape, dimensions, etc., with a minimum accuracy. Said dummy will have incorporated a positioning system such as a GPS or the like resistant to the damaging effects of the water, possible blows and bad weather, and may have a bag therein making sinking the dummy to subsequently refloating it by means of the automatic inflation of said bag possible, as well as a compartment inside the dummy which allows housing a small survival kit in the anticipation of the possibility that a shipwreck victim who is being searched for locates the device and can thus obtain aid prior to the arrival of the rescue team.

The objective of said features will be increasing the similarity of the device behaviour with respect to human body behaviour and they will offer new performances which will make it possible to increase shipwreck victim survival probabilities.

The invention is defined in the annexed claims.

The most immediate purpose of the dummy is to serve as a guide to the rescue team in the event that there is a search situation for people at sea, serving at the same time to locate any type of ship which must be searched for at sea as a result of a shipwreck, an air accident or similar situations.

Located in the outer part of the boat, one or several of them are launched into the water in the event of a shipwreck, such that, given the similarity with human body, there are high probabilities that both bodies are directed to the same site or to nearby sites, which will allow ruling out large search areas when trying to locate it. Likewise, a rescue team which must leave the scene of the event due to bad climatological conditions can launch several of them to subsequently obtain vital information for performing the search.

These devices on board an aircraft which has fallen into the sea will serve to facilitate both locating the accident site and for the search of the people who were on board.

The simplicity of the proposed device together with the savings achieved by using it make the present invention a very useful and easy-to-implement element to solve searches at sea.

### Field of the Invention

The application field of this invention is within the field of safety equipment manufacturing industry, especially within the field of maritime safety.

### Background of the Invention

Shipwrecks still commonly happen today with relative frequency, especially within the fishing sector with several every year. These events are caused by a range of causes, the most common causes including the opening of waterways, the instability of the ship, adverse meteorological effects (storms and hurricanes), fog obstructing sight and human errors.

Most of the time, shipwreck victim rescue is very difficult due to adverse climatic conditions (wind, fog, rain...), or to any other special condition hindering the rescue team from working, leading to the fact that in many occasions not all shipwreck victims are rescued fast enough, such that the location of some people is lost and subsequent search operations must be performed once the environmental condition have improved. On other occasions, the rescue simply does not reach the event site on time and the search must be started immediately.

The operation for searching for people at sea is performed by rescue services plotting concentric circles of increasing diameter centered in the last known position of the shipwreck. Given the difficulty of knowing the behaviour of the sea and wind currents in the exact time when each man falls into the water, as well as the effect thereof on the bodies which are swept out, all the points equidistant from the shipwreck are assigned the same possibility that the rescue target is found therein.

Devices serving as a guide in locating shipwreck victims such that significant statistical information of the most probable location where the targets can be found are known e.g. from CA 2 234 285 A1.

In search of the highest possible similarity of the present device with a human body, an improvement consisting of a compartment arranged inside the dummy which allows it to sink when filled with water, thus covering the possibility that the shipwreck victim searched for has drown and sunk, may be implemented. This compartment could also be emptied after a predetermined time, making refloating possible. Different documents describing devices which can be inflated manually or automatically which allow maintaining a human body afloat are known, although it is evident that all these inventions are conceived according to an objective different from that which is sought with this improvement of the present invention. CA 2 234 285 A1 describes a buoy that acquires geographical self-location data and has dual drift characteristics, so that it is capable of emulating the drift of a person or a life raft in water. Therefore, the proprietor of the present specification is unaware of any device or similar configuration intended to allow sinking and refloating a dummy or a human body with a self-inflatable life jacket which has an activation mechanism activated by means of a signal received by a transmitter.

The device may further have one or several compartments inside the dummy which will house a survival kit, it has been developed based on the fact that there is a high probability that the shipwreck victim can contact the dummy since they have to follow the same path before the arrival of the rescue teams. Similarly with the aforementioned improvement, the existence of any document relating to the inclusion of one or several compartments inside the dummy aimed at providing aid to the shipwreck victim is unknown up to today.

The search system described and used by the current rescue teams obviously involves a waste of the rescue team's time which can be a deciding factor of whether the people searched for will be located dead or alive since they are in a very vulnerable situation with the constant risk of suffering from hypothermia or fainting from exhaustion. Therefore, in the current state of the art the appearance of some device which facilitates search tasks and reduces rescue times would be desirable.

There have been shipwreck cases in which the ship has completely disappeared or the recovery of only large or small sized parts of the ship has been possible. Likewise, in the case of aircrafts which fall into the sea, it is common that there are great difficulties in recovering them. This causes considerable damage to the ship owner who will not able to receive the compensations agreed on with his insurance company unless he demonstrates that the shipwreck occurred. A device such as the one proposed in the present specification would greatly simplify the formalities with insurance companies by providing valuable information as to the possible whereabouts of the ship and it can further serve as evidence of the shipwreck in the event that the recovery thereof is impossible.

The present invention serves as a valuable element for aiding in search situations for searching for people at sea, providing significant statistical information of the most probable location where the targets can be found, which with its use will

The proposed device is configured as a dummy imitating the physical properties of a human body such as the dimensions, shape, weight, floatability, clothing, etc., largely determining the behaviour of a body in water.

The dummy will also have a positioning system such as a GPS or the like and a signal transmitter which allows indicating to a receiver its exact position at all times, a compartment hereinafter known as "lung" will preferably be housed in the chest of the dummy, it is provided with an opening valve which will have therein an impermeable inflatable bag, a compressed gas tank and an activation system which will include a programmable timer as well as, optionally, a signal receiver allowing the remote activation.

This "lung" is basically configured as a compartment (compartment is understood as any type of inner cavity inside the dummy) which by means of the timed opening of the valve could be flooded with seawater. This compartment will allow the entrance of between 6 and 8 liters of water such that once it is filled up, the dummy will sink, imitating the behaviour of a drowned person. The timer must be programmed according to the environment such that when there is the possibility that the shipwreck victim to be located has sunk, the activation system opens the valve allowing the filling of the compartment.

Once the dummy is to be recovered, or given the eventual possibility that the body searched for has risen to the surface, the inflation of the bag must be activated by means of the gas tank arranged therein, any other inflation system for inflating the bag being valid. The increase in the volume of the bag will displace the water contained in the compartment through the valve which remains permanently open after its initial opening, thus allowing refloating the dummy.

The inflation of the bag could be timed at the same time as the opening of the valve, or the activation order could be given from a remote control in the event that it has a remote activation system.

It may also have one or several compartments which will house a rescue kit and support materials for aiding the shipwreck victim. As has been discussed, this improvement anticipates the possibility that the shipwreck victim, object of the rescue, successfully contacts the dummy before the arrival of the rescue teams.

It may thus provide crucial aid for the shipwreck victim, who can thus have food supplies, chemical heat generators to prevent hypothermia, floatability elements, radio transmitters or any other type of element which can be useful in this type of situations.

Said compartments will be clearly marked such that they can be easily located by a person who finds the device, and they must be watertight to the extent that the materials housed therein are capable of withstanding low temperatures and the action of the water.

This kit will be arranged inside the dummy, within an impermeable cover which protects it from the seawater, bad weather and from the possible blows which may destroy it.

Thus, this device could accomplish its function as a rescue guiding element in various situations to be described below.

The dummy is located in one or several points inside the wrecked boat, accessible from the outside of the boat and prepared to be launched if any man falls into the water. In that case, the two bodies having similar characteristics and in one and the same environment will be moved in a similar manner in the water, being located in nearby sites which the locator will record to show to the rescue team.

It must be pointed out that the dummy with the locator will be arranged in a visible site of a legend where the main data of the ship to which it belongs such as name, emblem, registration number, etc., will appear. This will facilitate locating the ship and will serve to, in the event of it being impossible to recover it, a possible justification with insurance companies of the event occurred and the subsequent collection of the relevant compensations.

Within a boat or a helicopter of a rescue team, the launch of several of these dummies into the water will be highly convenient such that in the event that not all shipwreck victims are successfully rescued in a first attempt, a statistical estimation of the possible location of the remaining bodies is obtained.

Within an aircraft, incorporating an automatic activation system will serve to locate both aircraft itself as well as the passengers in the event that it falls into the sea.

This device, given its simplicity of use and its relatively low cost in contrast with the benefits it provides, will be an obvious advance in terms of maritime safety.

It must be indicated that the dummy further incorporates a remote inflatable life jacket facilitating the recovery thereof once its use has ended for a subsequent reuse.

It is very recommendable for the dummy to incorporate a fireproof protection such that in the event of a fire which causing the shipwreck, this element may withstand the flames and suitably accomplish its task. However, it is not a necessary condition for the operation of the device.

The incorporation of an automatic activator which will activate the positioning and transmission system when the latter is moved away from its normal location outside the boat, this being achieved by mechanical means, electrical means, magnetic means or whatever means commonly used for the automatic startup of equipment and systems is very important. This automatic activation element will allow the operation of the device in cases where there is no time for manual activation, such as for example in boat collisions or in an air accident.

The possibility of applying reflective or phosphorescent surfaces in the dummy aiding in locating it in situations with poor visibility and the possibility of incorporating therein some small survival kit such that it can serve to aid the shipwreck victim in case he/she locates the dummy before the arrival of the rescue thereof, is also anticipated. Likewise, the incorporation in the dummy of one or several belts which will have an end stitched to the dummy itself, having a snaphook at the other end, and which will serve, in the event that a shipwreck victim locates the dummy, so that he/she can be attached to it such that he/she can be supported on it and furthermore be located by remaining close to the device.

Another improvement consisting of a permanent illumination illuminating the dummy by means of fiber optic tube regularly distributed throughout the outer surface of said dummy such that it is supplied by a small battery must be mentioned, said tubes forming a series of luminous edges facilitating the locating of the invention to the naked eye may be incorporated.

### Description of the Drawings

To complement the description being made and for the purpose of facilitating better understanding of the features of the invention, a set of illustrative and nonlimiting drawings is attached as an integral part of said description which will be described below:

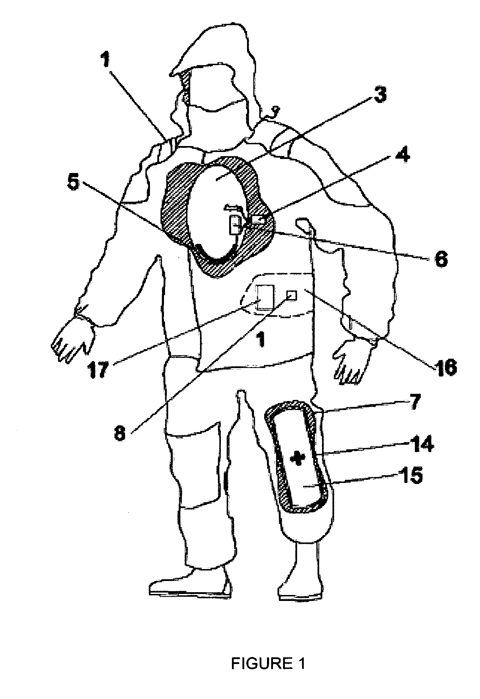

Figure 1 shows a sectioned view of the dummy where the inclusion of a "lung", as well as two extra compartments housing a small rescue kit and the receptacle to house the positioning and transmission system can be observed.

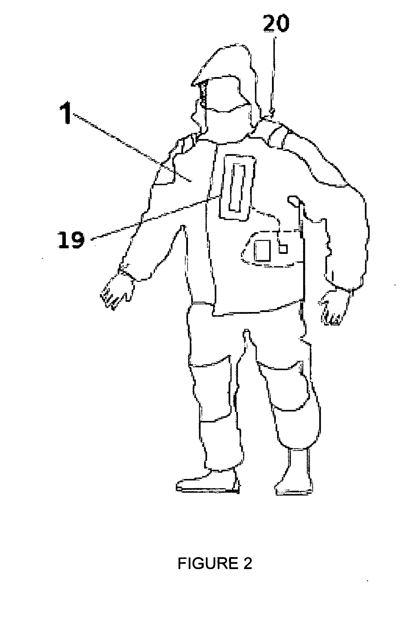

Figure 2 shows a sectioned view of the dummy where the receptacle to house the self-inflatable life jacket is seen.

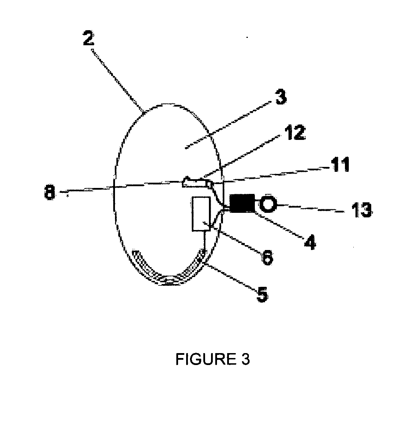

Figure 3 shows a scheme of the operation of the "lung".

### Preferred Embodiment of the Invention

In view of the mentioned drawings and according to the reference numbers used, a preferred embodiment of the invention which comprises the parts and elements indicated and described in detail below which do not attempt in any manner to limit the scope of the invention can be observed therein.

There is arranged on a dummy (1) made of a material or a mixture of materials having a density similar to that of the human body such as synthetic resins, rubber and other plastics, and articulated in a manner imitating a human body, a receptacle (16) with an impermeable cover which offers a certain level of mechanical protection for its interior, it has a positioning system by means of a GPS (17), as well as a transmitter (18) which will send a signal which will be captured by a receiver prepared for such purpose.

It will have a self-inflatable life jacket (19) therein which will be activated by means of the transmitter when the latter receives a determined signal. Close to the jacket (19) there is arranged the hook for placing it in its common location, being in this same place where it has a self-activation mechanism (20) consisting of, in this example, a tensor which will start the device when it is pulled on with a particular force, the device being kept shut off while it is not used such that it is always assured that the batteries are being completely charged for their use at any time. It also has manual activation means.

The dummy (1) will be dressed in the typical clothing of the boat workers or crew to assimilate the dummy to them to the greatest extent possible. Having sufficiently described the nature of the present invention as well as a way of carrying it out to practice, it is not considered necessary to further describe the invention so that any person skilled in the art can comprehend the scope thereof and advantages derived from it, it must be mentioned that it could be carried out to practice within its essential nature in other embodiments which differ in detail from that indicated by way of an example, which will also achieve the obtained protection provided that its fundamental principle is neither altered, changed nor modified.

In a preferred embodiment, the dummy with the positioning system to aid in people rescue operations at sea comprises: a compartment known as a "lung" (2) consisting of a cylindrical-shaped cavity (3) with 20 liters of capacity inside the dummy (1) and which has a water inlet (8) regulated by means of an opening valve (9). Said valve (9) is shaped like a hole (10) 1 cm in diameter which is connected to the outside by means of a conduit (12) of the same diameter made of plastic material, which conduit is covered by a thin copper sheet (11) attached by means of a conductor wire to the activation system (4). The opening happens when said system sends an electric current capable of deforming the sheet (1) and allowing the entrance of water.

It has a bag (5) made of material impermeable attached to a small compressed gas tank (6) inside the "lung" (2). When the activation system (4) opens the tank (6) (sending an electric signal causing the closure break and the gas to be discharged), the gas immediately inflates the bag (5), displacing the water contained therein and making the floatation of the dummy (1) possible.

This activation system (4) will have a programmable timer (13) which will allow predetermining the opening time for sinking and the time which must lapse until refloating. It will also have a signal receiver (13) which will allow the activation of the described remote elements.

It has another compartment (7) intended for housing a small rescue kit (15) that is duly packaged to be able to be introduced therein. Said compartment is formed by a cylindrical shaped watertight cavity (14) which is accessed by means of removing a cover existing in a leg of the dummy (1).

Both the compartment (7) by itself and the handle for removing the cover are clearly marked with bright colored and/or fluorescent indications.

Having sufficiently described the nature of the present invention, it must be mentioned that it could be carried out to practice within the scope of the claims in other embodiments which differ in detail from that indicated by way of example.

## Claims

1. A dummy with a positioning system to aid in people and ship rescue operations at sea, the dummy (1) imitating the physical properties of a human body and having a positioning equipment (17) as well as a transmitter (18) which allows sending a signal with the condition of the dummy, wherein the positioning equipment (17) and the transmitter (18) are housed in an inner receptacle (16), said receptacle having an impermeable cover for mechanical protection, **characterized in that** the dummy has attached to it a self-inflatable life jacket (19) which has an activation system (6) activated by means of a signal received by the transmitter (18).

2. The dummy with a positioning system to aid in people and ship rescue operations at sea according to claim 1, **characterized in that** it incorporates an automatic activator (20) which will activate the positioning and transmission system when it is moved away from its normal location outside the ship, this being achieved by mechanical, electrical, magnetic or any other means used for automatic start up of equipment and systems.

3. The dummy with a positioning system to aid in people and ship rescue operations at sea according to claims 1 to 2, **characterized in that** it has a manual activator.

4. The dummy with a positioning system to aid in people and ship rescue operations at sea according to claims 1 to 3, **characterized in that** it has reflective or phosphorescent surfaces.

5. The dummy with a positioning system to aid in people and ship rescue operations at sea according to claims 1 to 4, **characterized in that** it has therein a survival kit.

6. The dummy with a positioning system to aid in people and ship rescue operations at sea according to claims 1 to 5, **characterized in that** is has elements identifying the ship to which it belongs in a visible part.

7. The dummy with a positioning system to aid in people and ship rescue operations at sea according to claims 1 to 6, **characterized in that** it has one or several belts or cables which will be strongly attached to the dummy at one end and they will have a snaphook at the other end.

8. The dummy with a positioning system to aid in people and ship rescue operations at sea according to claims 1 to 7, **characterized in that** it has one or several autonomous low intensity illumination systems (LED, fiber optic tube or the like).

9. The dummy with a positioning system to aid in people and ship rescue operations at sea according to claims 1 to 8, **characterized in that** it is manufactured with fire-proof materials.

10. The dummy with a positioning system to aid in people and ship rescue operations at sea according to claim 1,
**characterized in that** it has a compartment (2) known as "lung" consisting of a cavity (3) inside the dummy (1) having a water inlet (8) regulated by means of an opening valve (9) containing a bag made of impermeable material (5) attached to a small compressed gas tank (6) and an activation system (4) connected to the valve (9) and the gas tank (6).

11. The dummy with a positioning system to aid in people and ship rescue operations at sea according to claim 1, **characterized in that** the activation system (4) has a remote signal receiver.

12. The dummy with a positioning system to aid in people and ship rescue operations at sea according to claim 1, **characterized in that** it has one or several compartments inside the dummy with the sufficient capacity to house a survival kit.

## Patentansprüche

1. Testpuppe mit einem Positionierungssystem, um Personen- und Schiffrettungsaktionen im Meer zu unterstützen, wobei die Testpuppe (1) die physischen Eigenschaften eines menschlichen Körpers nachahmt und eine Positionierungseinrichtung (17) sowie einen Sender (18) aufweist, der das Senden eines Signals mit dem Zustand der Testperson ermöglicht, wobei die Positionierungseinrichtung (17) und der Sender (18) in einem inneren Aufnahmebehälter (16) aufgenommen sind, wobei der Aufnahmebehälter einen undurchdringbaren Mantel für einen mechanischen Schutz aufweist, **dadurch gekennzeichnet, dass** an der Testperson eine selbstaufblasende Schwimmweste (19) angebracht ist, die ein Aktivierungssystem (6) aufweist, damit mit einem vom Sender (18) empfangenen Signal aktiviert wird.

2. Testpuppe mit einem Positionierungssystem, um Personen- und Schiffrettungsaktionen im Meer zu unterstützen, nach Anspruch 1, **dadurch gekennzeichnet, dass** es einen automatischen Aktivator (20) enthält, der das Positionierungs- und Sendesystem aktiviert, wenn er von seiner normalen Position außerhalb des Schiffs wegbewegt wird, wobei dies durch ein mechanisches, elektrisches, magnetisches oder ein anderes beliebiges Mittel erzielt wird, das für ein automatisches Hochfahren der Einrichtung und Systeme verwendet wird.

3. Testpuppe mit einem Positionierungssystem, um Personen- und Schiffrettungsaktionen im Meer zu unterstützen, nach Anspruch 1 oder 2, **dadurch gekennzeichnet, dass** sie einen manuellen Aktivator aufweist.

4. Testpuppe mit einem Positionierungssystem, um Personen- und Schiffrettungsaktionen im Meer zu unterstützen, nach Anspruch 1 bis 3, **dadurch gekennzeichnet, dass** sie reflektierende oder phosphoreszierende Oberflächen aufweist.

5. Testpuppe mit einem Positionierungssystem, um Personen- und Schiffrettungsaktionen im Meer zu unterstützen, nach Ansprüche 1 bis 4, **dadurch gekennzeichnet, dass** sie ein Überlebenspäckchen im Inneren aufweist.

6. Testpuppe mit einem Positionierungssystem, um Personen- und Schiffrettungsaktionen im Meer zu unterstützen, nach Anspruch 1 bis 5, **dadurch gekennzeichnet, dass** sie in einem sichtbaren Teil Elemente aufweist, die das Schiff identifizieren, zu dem sie gehört.

7. Testpuppe mit einem Positionierungssystem, um Personen- und Schiffrettungsaktionen im Meer zu unterstützen, nach Anspruch 1 bis 6, **dadurch gekennzeichnet, dass** sie einen oder mehrere Gürtel oder ein oder mehrere Kabel aufweist, die an einem Ende fest an der Testpuppe angeordnet sind und einen Karabinerhaken am anderen Ende aufweisen.

8. Testpuppe mit einem Positionierungssystem, um Personen- und Schiffrettungsaktionen im Meer zu unterstützen, nach Anspruch 1 bis 7 **dadurch gekennzeichnet, dass** sie ein oder mehrere autonome Beleuchtungssysteme mit geringer Intensität (LED, Glasfasenohr oder dergleichen) aufweist.

9. Testpuppe mit einem Positionierungssystem, um Personen- und Schiffrettungsaktionen im Meer zu unterstützen, nach Anspruch 1 bis 8, **dadurch gekennzeichnet, dass** sie mit feuerfesten Materialien hergestellt ist.

10. Testpuppe mit einem Positionierungssystem, um Personen- und Schiffrettungsaktionen im Meer zu unterstützen, nach Anspruch 1, **dadurch gekennzeichnet, dass** sie ein Abteil (2) aufweist, das als "Lunge" bekannt ist, die aus einem Hohlraum (3) innerhalb der Testpuppe (1) mit einem Wassereinlass (8), der durch ein Öffnungsventil (9) geregelt wird, das einen Beutel aufweist, der aus einem undurchlässigen Material (5) gebildet ist, der an einem kleinen Druckgastank (6) angebracht ist, und einem Aktivierungssystem (4) besteht, das mit dem Ventil (9) und dem Gastank (6) verbunden ist.

11. Testpuppe mit einem Positionierungssystem, um Personen- und Schiffrettungsaktionen im Meer zu unterstützen, nach Anspruch 1, **dadurch gekennzeichnet, dass** das Aktivierungssystem (4) einen Remote-Signalempfänger aufweist.

12. Testpuppe mit einem Positionierungssystem, um Personen- und Schiffrettungsaktionen im Meer zu unterstützen, nach Anspruch 1, **dadurch gekennzeichnet, dass** sie ein oder mehrere Abteile innerhalb der Testpuppe mit ausreichend Kapazität zur Aufnahme eines Überlebenspäckchen aufweist.

## Revendications

1. Mannequin avec un système de localisation destiné à aider dans des opérations de sauvetage de personnes et de navires en mer, le mannequin (1) imitant les propriétés physiques d'un corps humain et ayant un équipement de localisation (17) ainsi qu'un émetteur (18) qui permet d'envoyer un signal indiquant l'état du mannequin, dans lequel l'équipement de localisation (17) et l'émetteur (18) sont logés dans un réceptacle (16) intérieur, ledit réceptacle ayant un recouvrement imperméable pour la protection mécanique, **caractérisé en ce qu'**au mannequin est attaché un gilet de sauvetage (19) autogonflant qui a un système d'activation (6) activé au moyen d'un signal reçu par l'émetteur (18).

2. Mannequin avec un système de localisation destiné à aider dans des opérations de sauvetage de personnes et de navires en mer selon la revendication 1, **caractérisé en ce qu'**il incorpore un activateur automatique (20) qui active le système de localisation et de transmission quand il est déplacé de son emplacement normal à l'extérieur du navire, cela étant réalisé par des moyens mécaniques, électriques, magnétiques ou tout autre moyen utilisé pour le démarrage automatique de l'équipement et des systèmes.

3. Mannequin avec un système de localisation destiné à aider dans des opérations de sauvetage de personnes et de navires en mer selon les revendications 1 à 2, **caractérisé en ce qu'**il a un activateur manuel.

4. Mannequin avec un système de localisation destiné à aider dans des opérations de sauvetage de personnes et de navires en mer selon les revendications 1 à 3, **caractérisé en ce qu'**il a des surfaces réfléchissantes ou phosphorescentes.

5. Mannequin avec un système de localisation destiné à aider dans des opérations de sauvetage de personnes et de navires en mer selon les revendications 1 à 4, **caractérisé en ce qu'**il contient une trousse de survie.

6. Mannequin avec un système de localisation destiné à aider dans des opérations de sauvetage de personnes et de navires en mer selon les revendications 1 à 5, **caractérisé en ce qu'**il a, dans une partie visible, des éléments identifiant le navire auquel il appartient.

7. Mannequin avec un système de localisation destiné à aider dans des opérations de sauvetage de personnes et de navires en mer selon les revendications 1 à 6, **caractérisé en ce qu'**il a un/une ou plusieurs ceintures et câbles qui seront attachés solidement au mannequin à une extrémité et ils auront un mousqueton à l'autre extrémité.

8. Mannequin avec un système de localisation destiné à aider dans des opérations de sauvetage de personnes et de navires en mer selon les revendications 1 à 7, **caractérisé en ce qu'**il a un ou plusieurs systèmes d'éclairage de faible intensité autonomes (LED, tube à fibre optique ou similaires).

9. Mannequin avec un système de localisation destiné à aider dans des opérations de sauvetage de personnes et de navires en mer selon les revendications 1 à 8, **caractérisé en ce qu'**il est fabriqué avec des matériaux ignifuges.

10. Mannequin avec un système de localisation destiné à aider dans des opérations de sauvetage de personnes et de navires en mer selon la revendication 1, **caractérisé en ce qu'**il a un compartiment (2) appelé « poumon » constitué d'une cavité (3) à l'intérieur du mannequin (1), ayant une entrée d'eau (8) régulée au moyen d'une valve d'ouverture (9), contenant un sac réalisé en matériau imperméable (5) attaché à un petit réservoir de gaz comprimé (6) et un système d'activation (4) raccordé à la valve (9) et au réservoir de gaz (6).

11. Mannequin avec un système de localisation destiné à aider dans des opérations de sauvetage de personnes et de navires en mer selon la revendication 1, **caractérisé en ce que** le système d'activation (4) a un récepteur de signaux à distance.

12. Mannequin avec un système de localisation destiné à aider dans des opérations de sauvetage de personnes et de navires en mer selon la revendication 1, **caractérisé en ce qu'**il a un ou plusieurs compartiments à l'intérieur du mannequin avec une contenance suffisante pour loger une trousse de survie.
